# EUROPEAN PATENT APPLICATION

(11) **EP 4 831 463 A1**
(43) Date of publication of application: **28.10.2026**
(21) Application number: 24924595.2
(22) Date of filing: 23.12.2024
(51) Int. Cl.: F02B 39/00, F01P 3/20

(54) **SUPERCHARGER**

(30) Priority: 16.02.2024 JP 2024021911
(71) Applicant: Mitsubishi Heavy Industries Marine Machinery & Equipment Co., Ltd., Nagasaki-shi Nagasaki 850-8610 (JP)
(72) Inventor: SUZUKI, Hayato, Nagasaki-shi, Nagasaki 850-8610 (JP); IWASA, Yukihiro, Nagasaki-shi, Nagasaki 850-8610 (JP); KANAZAWA, Shingo, Nagasaki-shi, Nagasaki 850-8610 (JP)
(74) Representative: Hoffmann Eitle
(86) International application number: PCT/JP2024/045334
(87) International publication number: WO 2025/173392

(57) **Abstract**

A turbocharger includes: a turbine blade configured to be driven by exhaust gas discharged from an internal combustion engine; a stationary member including a tubular portion having a stationary wall surface that faces the turbine blade with a radial gap therebetween, the tubular portion forming therein an outlet passage through which the exhaust gas that has passed through the turbine blade flows; a cooling medium passage disposed adjacent to the stationary member and through which a cooling medium for cooling the stationary member can flow; a cooling medium introduction line for guiding the cooling medium to the cooling medium passage; and a cooling medium flow adjusting device configured to adjust a flow rate of the cooling medium guided to the cooling medium passage via the cooling medium introduction line, the cooling medium flow adjusting device being configured to increase the flow rate of the cooling medium guided to the cooling medium passage during low-load operation of the internal combustion engine compared to during high-load operation.

## Description

### TECHNICAL FIELD

The present disclosure relates to a turbocharger.

The present application claims priority based on Japanese Patent Application No. 2024-021911 filed on February 16, 2024, the entire content of which is incorporated herein by reference.

### BACKGROUND ART

Patent Document 1 discloses that a cooling passage through which engine cooling water flows is formed inside a shroud portion of a casing provided on an outer peripheral side of a turbine wheel.

### Citation List

### Patent Literature

Patent Document 1: JP2009-243277A

### SUMMARY

### Problems to be Solved

Generally, a tip clearance of a turbine blade (a radial gap between it and a stationary member) of a turbocharger is set to be optimal during high-load operation of an internal combustion engine. Therefore, during low-load operation of an internal combustion engine, the tip clearance of the turbine blade increases, which may reduce the efficiency of the turbine of the turbocharger.

The invention described in Patent Document 1 increases the engine cooling water flowing through the cooling passage in response to an acceleration request of the engine, that is, aims to improve the efficiency of the turbine of the turbocharger during acceleration of the engine, and does not necessarily improve the efficiency of the turbine of the turbocharger during low-load operation.

In view of the above circumstances, an object of at least one embodiment of the present disclosure is to provide a turbocharger capable of improving the efficiency of a turbine of the turbocharger during low-load operation.

### Solution to the Problems

A turbocharger according to at least one embodiment of the present disclosure includes:
a turbine blade configured to be driven by exhaust gas discharged from an internal combustion engine;
a stationary member including a tubular portion having a stationary wall surface that faces the turbine blade with a radial gap therebetween, the tubular portion forming therein an outlet passage through which the exhaust gas that has passed through the turbine blade flows;
a cooling medium passage disposed adjacent to the stationary member and through which a cooling medium for cooling the stationary member can flow;
a cooling medium introduction line for guiding the cooling medium to the cooling medium passage; and
a cooling medium flow adjusting device configured to adjust a flow rate of the cooling medium guided to the cooling medium passage via the cooling medium introduction line, the cooling medium flow adjusting device being configured to increase the flow rate of the cooling medium guided to the cooling medium passage during low-load operation of the internal combustion engine compared to during high-load operation.

### Advantageous Effects

At least one embodiment of the present disclosure provides a turbocharger capable of improving the efficiency of a turbine of the turbocharger during low-load operation.

### BRIEF DESCRIPTION OF DRAWINGS

FIG. 1 is a schematic diagram of an internal combustion engine system equipped with a turbocharger according to an embodiment of the present disclosure.
FIG. 2 is a schematic diagram of a turbocharger according to an embodiment of the present disclosure.
FIG. 3 is a schematic diagram of a turbocharger according to an embodiment of the present disclosure.
FIG. 4 is a schematic diagram of a turbocharger according to an embodiment of the present disclosure.
FIG. 5 is a schematic diagram of a turbocharger according to an embodiment of the present disclosure.
FIG. 6 is a schematic diagram of a turbocharger according to an embodiment of the present disclosure.
FIG. 7 is a schematic diagram of a turbocharger according to an embodiment of the present disclosure.
FIG. 8 is a schematic diagram of a turbocharger according to an embodiment of the present disclosure.
FIG. 9 is a schematic cross-sectional view of a cooling medium passage according to an embodiment of the present disclosure, viewed from one side in the axial direction.
FIG. 10 is a schematic cross-sectional view of a cooling medium passage according to an embodiment of the present disclosure, viewed from one side in the axial direction.
FIG. 11 is a schematic diagram of a cooling medium passage according to an embodiment of the present disclosure, viewed from a radially outer side.
FIG. 12 is a schematic diagram of a turbocharger according to an embodiment of the present disclosure.
FIG. 13 is a schematic diagram of a turbocharger according to an embodiment of the present disclosure.

### DETAILED DESCRIPTION

Embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure.

In the following description, when simply referring to "upstream", it shall refer to upstream along the direction of a main flow of fluid in a portion or area for which the direction is being described. Similarly, in the following description, when simply referring to "downstream", it shall refer to downstream along the direction of a main flow of fluid in a portion or area for which the direction is being described.

### (Internal Combustion Engine System)

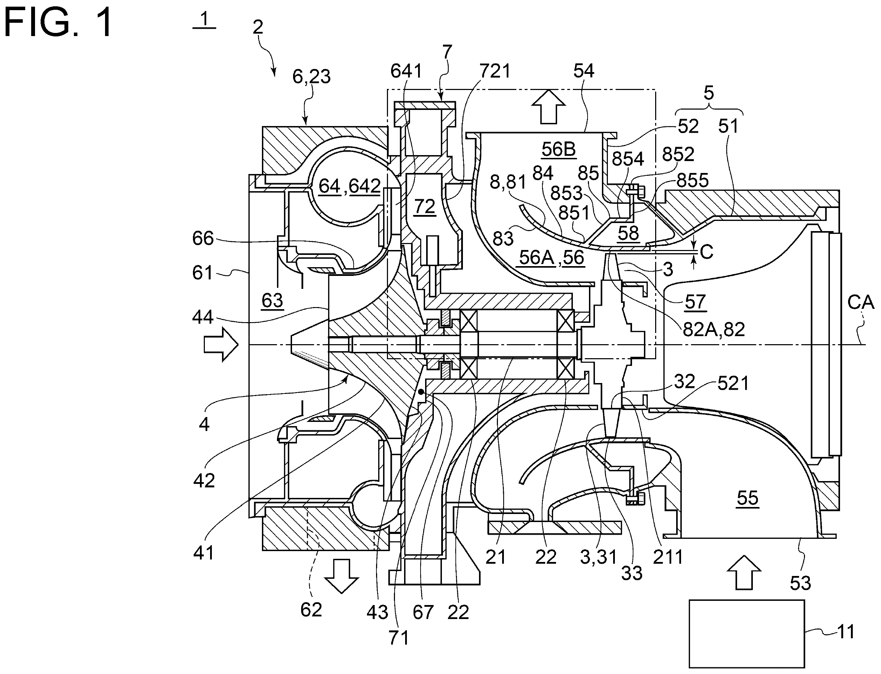

FIG. 1 is a schematic diagram of an internal combustion engine system 1 equipped with a turbocharger 2 according to an embodiment of the present disclosure. In FIG. 1, a cross-section along a rotation center axis CA of the turbocharger 2 is schematically shown. The internal combustion engine system 1 includes an internal combustion engine 11 and a turbocharger 2 mounted on the internal combustion engine 11. In the following embodiments, the turbocharger 2 mounted on a marine internal combustion engine will be described, but the turbocharger 2 of the present disclosure may be mounted on an internal combustion engine other than a marine internal combustion engine.

### (Turbocharger)

As shown in FIG. 1, the turbocharger 2 includes a rotational shaft 21 extending along the rotation center axis CA, a bearing 22 rotatably supporting the rotational shaft 21, a turbine blade 3, an impeller 4, and a casing 23 configured to house the rotational shaft 21, the bearing 22, the turbine blade 3, and the impeller 4.

Hereinafter, a direction in which the rotation center axis CA of the rotational shaft 21 extends (the left-right direction in FIG. 1) is defined as the axial direction of the rotational shaft 21 (the turbocharger 2), a direction perpendicular to the rotation center axis CA is defined as the radial direction of the rotational shaft 21 (the turbocharger 2), and a circumferential direction around the rotation center axis CA is defined as the circumferential direction of the rotational shaft 21 (the turbocharger 2). In the present disclosure, the axial direction, the radial direction, and the circumferential direction of the turbocharger 2 may be simply referred to as the axial direction, the radial direction, and the circumferential direction, respectively. The expression "along a certain direction" in the present disclosure includes not only the certain direction but also a direction inclined within a range of ±15° with respect to the certain direction.

The turbine blade 3 is attached to one side in the axial direction of the rotational shaft 21. The impeller 4 is attached to the other side in the axial direction of the rotational shaft 21. The bearing 22 is arranged between the turbine blade 3 and the impeller 4 in the axial direction of the rotational shaft 21. The turbine blade 3 and the impeller 4 are mechanically connected to each other via the rotational shaft 21 and are configured to be integrally rotatable.

The turbine blade 3 is disposed in an exhaust passage of the internal combustion engine 11. The impeller 4 is disposed in an intake passage of the internal combustion engine 11. The turbine blade 3 is rotated by exhaust gas discharged from the internal combustion engine 11, and combustion gas (for example, air) supplied to the internal combustion engine 11 is compressed (supercharged) by the impeller 4 that rotates in conjunction with the turbine blade 3.

### (Turbine blade)

In the illustrated embodiment, the rotational shaft 21 has a disk portion 211 protruding outward in the radial direction from an outer peripheral surface of the rotational shaft 21 on one side in the axial direction of the rotational shaft 21. A single-stage turbine blade row, which is composed of a plurality of turbine blades 3 arranged in a row along the circumferential direction of the rotational shaft 21, is attached to an outer peripheral surface of the disk portion 211 of the rotational shaft 21.

Each of the plurality of turbine blades 3 has a blade surface 31, a blade root 32 connected to the outer peripheral surface of the disk portion 211, and a tip end (blade tip) 33 spaced farther outward in the radial direction of the rotational shaft 21 from the rotation center axis CA than the blade root 32. Each of the plurality of turbine blades 3 may be formed integrally with the rotational shaft 21, or may be separate from the rotational shaft 21 and fixed to the rotational shaft 21 by welding or the like.

### (Casing)

As shown in FIG. 1, the casing 23 includes a turbine housing 5 that rotatably houses the turbine blade 3, a compressor housing 6 that rotatably houses the impeller 4, and a bearing housing 7 that houses the bearing 22. The bearing housing 7 is arranged between the turbine housing 5 and the compressor housing 6 in the axial direction of the rotational shaft 21, and is fastened to each of the turbine housing 5 and the compressor housing 6 with fastening members such as bolts.

### (Impeller)

The impeller 4 is configured to guide combustion gas guided along the axial direction outward in the radial direction. As shown in FIG. 1, the impeller 4 includes a hub 41 having a front surface 42 and a back surface 43, and a plurality of blades 44 provided to protrude outward in the radial direction from an outer peripheral surface of the hub 41. The hub 41 is formed in a conical shape such that the outer dimension gradually increases toward a side away from an intake inlet 61 of the compressor housing 6 in the axial direction. The front surface 42 is a surface with the blades 44 on the side toward the intake inlet 61 in the axial direction of the hub 41. The back surface 43 is a surface on the side away from the intake inlet 61 in the axial direction of the hub 41.

### (Compressor Housing)

As shown in FIG. 1, the compressor housing 6 has an intake inlet 61 for introducing combustion gas from the outside of the compressor housing 6, and an intake outlet 62 for discharging the combustion gas compressed by rotation of the impeller 4 to the outside of the compressor housing 6. In the illustrated embodiment, the intake inlet 61 is formed on an end surface of the compressor housing 6 on the other side in the axial direction, and the intake outlet 62 is formed on a radially outer surface of the compressor housing 6.

Inside the compressor housing 6, an intake inlet passage 63 for guiding the combustion gas taken in through the intake inlet 61 to the impeller 4, and an intake outlet passage 64 for guiding the combustion gas compressed by rotation of the impeller 4 to the intake outlet 62 are formed. The intake outlet passage 64 includes a diffuser 641 extending along the radial direction of the rotational shaft 21 on an outer peripheral side of the impeller 4, and a scroll passage 642 formed in a spiral shape communicating with the diffuser 641 and extending along the circumferential direction of the rotational shaft 21 on an outer peripheral side of the diffuser 641. The compressor housing 6 is formed with a shroud portion 66 so as to cover the impeller 4.

The combustion gas introduced into the compressor housing 6 flows between the plurality of blades 44 of the rotationally driven impeller 4, where its dynamic pressure is mainly increased, and then flows into the diffuser 641 located radially outward, where a part of the dynamic pressure is converted into static pressure to increase the pressure. In this state, the combustion gas is sent into a combustion chamber of the internal combustion engine 11 through the scroll passage 642 and the intake outlet 62. At this time, a portion of the combustion gas whose pressure has been increased by the impeller 4 passes through a gap formed between an outer peripheral end of the impeller 4 and a portion of the bearing housing 7 facing the outer peripheral end of the impeller 4, and flows into an impeller back space 67 formed on the side of the back surface 43 of the impeller 4.

The impeller back space 67 is an internal space facing the back surface 43 of the impeller 4, into which the combustion gas compressed by rotation of the impeller 4 flows. In the illustrated embodiment, the impeller back space 67 is a space defined at least in part by the back surface 43 of the impeller 4 and an end surface 71 of the bearing housing 7 on the other side in the axial direction. The impeller back space 67 may be a space defined at least in part by the back surface 43 of the impeller 4 and a portion of the compressor housing 6 facing the back surface 43. The impeller back space 67 may be partially defined by a member housed in the compressor housing 6 or the bearing housing 7.

### (Turbine Housing)

As shown in FIG. 1, the turbine housing 5 has an exhaust gas inlet 53 for introducing exhaust gas from the outside of the turbine housing 5, and an exhaust gas outlet 54 for discharging the exhaust gas that has passed through the turbine blade 3 to the outside of the turbine housing 5. In the illustrated embodiment, the turbine housing 5 includes an inlet-side housing 51 in which the exhaust gas inlet 53 is formed, and an outlet-side housing 52 in which the exhaust gas outlet 54 is formed on a radially outer surface. The outlet-side housing 52 is arranged between the bearing housing 7 and the inlet-side housing 51 in the axial direction of the rotational shaft 21, and is fastened to each of the bearing housing 7 and the inlet-side housing 51 with fastening members such as bolts.

Inside the inlet-side housing 51, an exhaust gas inlet passage 55 for guiding the exhaust gas entering through the exhaust gas inlet 53 to the turbine blade 3 is formed. Inside the outlet-side housing 52, an exhaust gas outlet passage 56 for guiding the exhaust gas that has passed through the turbine blade 3 to the exhaust gas outlet 54 is formed. Relatively high-temperature exhaust gas discharged from the internal combustion engine 11 is introduced into the turbine housing 5 through the exhaust gas inlet 53 and sent to the turbine blade 3, whereby the turbine blade 3 is rotationally driven around the rotation center axis CA as a rotation center. The exhaust gas that has rotationally driven the turbine blade 3 is discharged through the exhaust gas outlet 54.

### (Stationary Member)

As shown in FIG. 1, the turbocharger 2 includes a stationary member 8 having at least a tubular portion 81. The tubular portion 81 has a stationary wall surface 82A facing the turbine blade 3 with a radial gap C therebetween. In the illustrated embodiment, the tubular portion 81 is formed in an annular shape covering a radially inner wall surface 521 of the outlet-side housing 52 with a radial gap therebetween. An annular passage 57 extending along the axial direction of the rotational shaft 21 is formed between an inner peripheral surface 82 of the tubular portion 81 including the stationary wall surface 82A and the wall surface 521 of the outlet-side housing 52. The annular passage 57 is a passage for guiding the exhaust gas, which is a working fluid of the turbine blade 3, from the one side (right side in FIG. 1) to the other side (left side in FIG. 1) in the axial direction of the rotational shaft 21.

Each of the plurality of turbine blades 3 is arranged in the annular passage 57. In each of the plurality of turbine blades 3, the tip end 33 faces the stationary wall surface 82A, which is a part of the inner peripheral surface 82, with the radial gap C therebetween.

An upstream outlet passage (outlet passage) 56A continuous with the downstream side of the annular passage 57 is formed between an inner peripheral surface 83 adjoining the inner peripheral surface 82 of the tubular portion 81 and the wall surface 521 of the outlet-side housing 52. The upstream outlet passage 56A is a passage for guiding the exhaust gas that has passed through the annular passage 57 outward in the radial direction. The inner peripheral surface 83 is formed on the other side (left side in FIG. 1) in the axial direction relative to the inner peripheral surface 82. The tubular portion 81 is inclined such that a distance (radial distance) of the inner peripheral surface 83 from the rotation center axis CA increases toward the other side.

The exhaust gas outlet passage 56 includes the upstream outlet passage 56A and a downstream outlet passage 56B continuous with the downstream side of the upstream outlet passage 56A. The exhaust gas flowing through the downstream outlet passage 56B has a lower temperature than the exhaust gas flowing through the annular passage 57 and the upstream outlet passage 56A. Since the tubular portion 81 has the inner peripheral surfaces 82 and 83 facing the annular passage 57 and the upstream outlet passage 56A, and an outer peripheral surface 84 facing the downstream outlet passage 56B, a temperature gradient between the inner peripheral surfaces 82, 83 and the outer peripheral surface 84 is high, and the amount of heat transferred from the exhaust gas flowing through the annular passage 57 and the upstream outlet passage 56A is large.

In the illustrated embodiment, the stationary member 8 further includes a support arm portion 85 extending outward in the radial direction from an inner peripheral end portion 851 connected to the outer peripheral surface of the tubular portion 81, and an outer peripheral end portion 852 of the support arm portion 85 is supported by the casing 23. The support arm portion 85 is formed in an annular shape extending along the circumferential direction of the rotational shaft 21. As shown in FIG. 1, in a cross-section along the rotation center axis CA, the support arm portion 85 includes an inclined side portion 853 inclined toward the one side (right side in FIG. 1) in the axial direction from the inner peripheral end portion 851 toward the radially outer side, an axial side portion 854 extending from an outer peripheral end portion of the inclined side portion 853 along the axial direction toward the one side in the axial direction, and a radial side portion 855 extending radially outward along the radial direction from an end portion of the axial side portion 854 on the one side. The radial side portion 855 has the above-described outer peripheral end portion 852.

Since the outer peripheral end portion 852 of the support arm portion 85 is sandwiched between the inlet-side housing 51 and the outlet-side housing 52, radial thermal expansion of the stationary member 8 due to heat transfer from the exhaust gas is restricted.

In the illustrated embodiment, the outer peripheral end portion 852 of the support arm portion 85 is sandwiched between the inlet-side housing 51 and the outlet-side housing 52, but it may be fixed to either the inlet-side housing 51 or the outlet-side housing 52. Further, in the illustrated embodiment, the stationary member 8 is separate from the inlet-side housing 51 and the outlet-side housing 52, but it may be formed integrally with the inlet-side housing 51 or the outlet-side housing 52, and in this case, a configuration not including the support arm portion 85 may be adopted.

In the illustrated embodiment, an annular hollow space 58 extending along the circumferential direction of the rotational shaft 21 is formed among the tubular portion 81, the support arm portion 85, and the inlet-side housing 51.

When the load of the internal combustion engine 11 increases, the temperature of the exhaust gas introduced into the turbine blade 3 increases, the amount of heat transferred to the turbine blade 3 and the stationary member 8 increases, and relatively large thermal expansion occurs in the turbine blade 3 and the stationary member 8. When the load of the internal combustion engine 11 increases, the rotational speed of the turbine blade 3 increases, so that the turbine blade 3 expands due to a relatively large centrifugal force. Since the stationary member 8 has a structure in which radial thermal expansion is restricted, such as being supported by the turbine housing 5 or being formed integrally with the turbine housing 5, it is difficult for the stationary member 8 to undergo thermal expansion similar to that of the turbine blade 3 according to the load of the internal combustion engine 11.

Generally, a tip clearance (radial gap C) of the turbine blade 3 is set to be optimal during high-load operation of the internal combustion engine 11. Therefore, during low-load operation of the internal combustion engine 11, the tip clearance of the turbine blade 3 increases, which may reduce the efficiency of the turbine of the turbocharger 2.

### (Cooling Medium Passage, Cooling Medium Flow Adjusting Device)

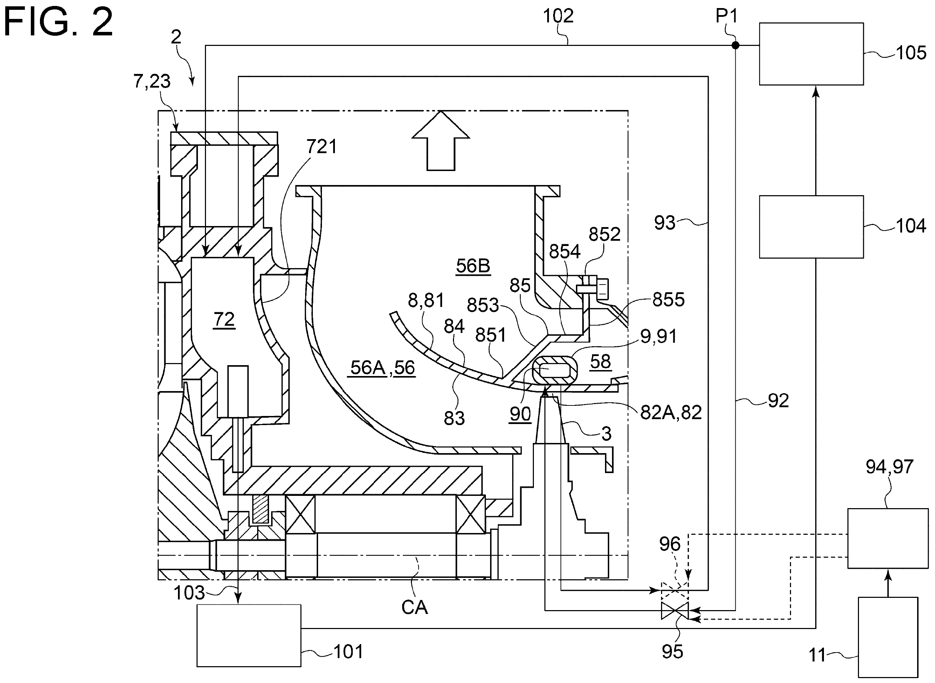

FIGs. 2 to 8 are each a schematic diagram of the turbocharger 2 according to an embodiment of the present disclosure. In FIGs. 2 to 8, a semi-cross-section along the rotation center axis CA of the turbocharger 2 is schematically shown. As shown in FIGs. 2 to 6, the turbocharger 2 includes a cooling medium passage 9 disposed adjacent to the stationary member 8 and through which a cooling medium for cooling the stationary member 8 can flow, a cooling medium introduction line 92 for guiding the cooling medium from a supply source to the cooling medium passage 9, a cooling medium discharge line 93 for guiding the cooling medium discharged from the cooling medium passage 9 to a discharge destination of the cooling medium, and a cooling medium flow adjusting device 94 configured to adjust the flow rate of the cooling medium guided to the cooling medium passage 9 via the cooling medium introduction line 92.

The cooling medium passage 9 is provided inside the turbine housing 5. In the embodiments shown in FIGs. 2 to 8, the cooling medium passage 9 includes a cooling pipe 91 having an internal space 90 through which the cooling medium can flow. Each of the cooling medium introduction line 92 and the cooling medium discharge line 93 only needs to form a flow passage for the cooling medium, and may include a hole or a hollow portion formed in a solid portion of the casing 23, or may include an external pipe arranged outside the casing 23.

The cooling medium flow adjusting device 94 is configured to increase the flow rate of the cooling medium guided to the cooling medium passage 9 during low-load operation of the internal combustion engine 11 compared to during high-load operation. In the illustrated embodiment, the cooling medium flow adjusting device 94 includes either a flow regulating valve 95 disposed in the cooling medium introduction line 92 or a flow regulating valve 96 disposed in the cooling medium discharge line 93, and a controller 97 for controlling opening and closing operations of the flow regulating valves 95 and 96. The flow regulating valves 95 and 96 may be on-off valves whose opening degree can be adjusted between fully closed and fully open, or may be opening regulating valves whose opening degree can be adjusted among fully closed, fully open, and at least one intermediate opening degree.

The controller 97 is an electronic control unit for controlling opening and closing operations of the flow regulating valves 95 and 96, and is configured as a microcomputer composed of a CPU (processor) (not shown), a memory such as a ROM or a RAM, a storage device such as an external storage device, an I/O interface, a communication interface, and the like. Information (signals) regarding the load of the internal combustion engine 11 is sent to the controller 97 from the internal combustion engine 11 or the like. The controller 97 controls the opening and closing operations of the flow regulating valves 95 and 96 according to the information regarding the load of the internal combustion engine 11.

In an embodiment, when the load of the internal combustion engine 11 exceeds a set load set as a boundary between a low load and a high load, the controller 97 executes an opening degree instruction to reduce the opening degree of the flow regulating valves 95 and 96. At this time, the controller 97 may execute an opening degree instruction to fully close the flow regulating valves 95 and 96. Further, the controller 97 may keep the opening degree of the flow regulating valves 95 and 96 constant when the load of the internal combustion engine 11 is less than the set load.

By relatively increasing the flow rate of the cooling medium guided to the cooling medium passage 9 during low-load operation of the internal combustion engine 11, the cooling effect of the stationary member 8 by the cooling medium is enhanced, and the radial thermal expansion of the stationary member 8 is suppressed, whereby it is possible to suppress an increase in the tip clearance (radial gap C) of the turbine blade 3 during low-load operation of the internal combustion engine 11. By suppressing the increase in the tip clearance of the turbine blade 3 during low-load operation of the internal combustion engine 11, the efficiency of the turbine of the turbocharger can be improved during low-load operation of the internal combustion engine 11.

In the embodiments shown in FIGs. 2 to 8, the cooling medium is lubricating oil. By using lubricating oil, which may be used for lubricating equipment mounted on the turbocharger 2 (for example, the bearing 22), for cooling the stationary member 8, an existing lubricating oil supply system can be used, and there is no need to install a separate lubrication system. This helps to minimize the complexity of the structure of the internal combustion engine system 1 including the turbocharger 2.

In the embodiments shown in FIGs. 2 to 6, a lubricating oil storage space 72 configured to store lubricating oil is formed inside the bearing housing 7. The turbocharger 2 includes a lubricating oil storage device 101 disposed outside the bearing housing 7 (casing 23) and configured to store lubricating oil, a lubricating oil introduction line 102 for guiding the lubricating oil from the lubricating oil storage device 101 to the lubricating oil storage space 72, and a lubricating oil recovery line 103 for recovering the lubricating oil from the lubricating oil storage space 72 via a lubricating oil supply destination such as the bearing 22 to the lubricating oil storage device 101. The lubricating oil introduction line 102 is provided with a lubricating oil pump 104 for boosting the pressure of the lubricating oil and a lubricating oil cooler 105 for cooling the lubricating oil. In the illustrated embodiment, the lubricating oil cooler 105 is disposed downstream of the lubricating oil pump 104 in the lubricating oil introduction line 102.

### (Connection Destination of Cooling Medium Introduction Line)

As shown in FIGs. 2 to 5, the cooling medium introduction line 92 may be connected to the lubricating oil introduction line 102. In the illustrated embodiment, the cooling medium introduction line 92 is connected to a connection portion P1 downstream of the lubricating oil cooler 105 in the lubricating oil introduction line 102. In this case, the lubricating oil stored in the lubricating oil storage device 101 can be guided to the cooling medium passage 9 via the cooling medium introduction line 92 and a portion of the lubricating oil introduction line 102 upstream of the connection portion P1 with the cooling medium introduction line 92. Since the equipment constituting the lubricating oil circulation system (the lubricating oil storage device 101, the lubricating oil introduction line 102, the lubricating oil recovery line 103, the lubricating oil pump 104, and the lubricating oil cooler 105) can be used as equipment for cooling the stationary member 8, the lubricating oil can be used for cooling the stationary member 8 while minimizing the complexity of the structure of the internal combustion engine system 1 including the turbocharger 2.

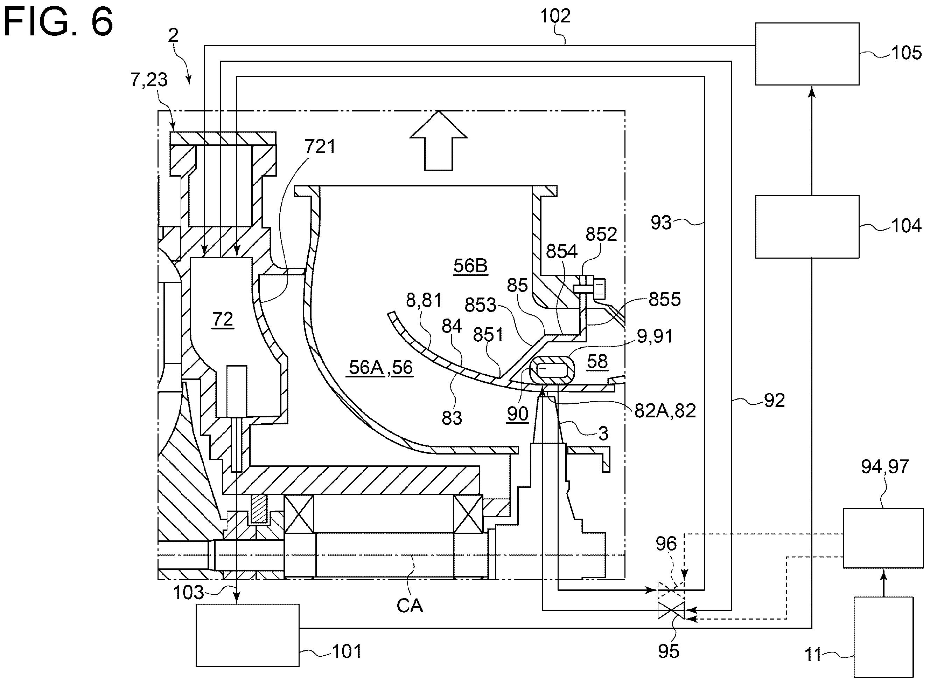

As shown in FIG. 6, the cooling medium introduction line 92 may be connected to the lubricating oil storage space 72. In this case, the lubricating oil stored in the lubricating oil storage space 72 can be guided to the cooling medium passage 9 via the cooling medium introduction line 92. As a result, since the equipment constituting the lubricating oil circulation system can be used as equipment for cooling the stationary member 8, the lubricating oil can be used for cooling the stationary member 8 while minimizing the complexity of the structure of the internal combustion engine system 1 including the turbocharger 2.

### (Connection Destination of Cooling Medium Discharge Line)

As shown in FIG. 2, the cooling medium discharge line 93 may be connected to the lubricating oil storage space 72. The lubricating oil (cooling medium) flowing through the cooling medium discharge line 93 recovers heat energy from the stationary member 8 in the cooling medium passage 9. By introducing the lubricating oil flowing through the cooling medium discharge line 93 into the lubricating oil storage space 72, the temperature of the lubricating oil stored in the lubricating oil storage space 72 can be increased. By increasing the temperature of the lubricating oil stored in the lubricating oil storage space 72, the viscosity of the lubricating oil can be reduced, and the mechanical loss of the equipment (for example, the bearing 22) to which the lubricating oil is supplied can be reduced.

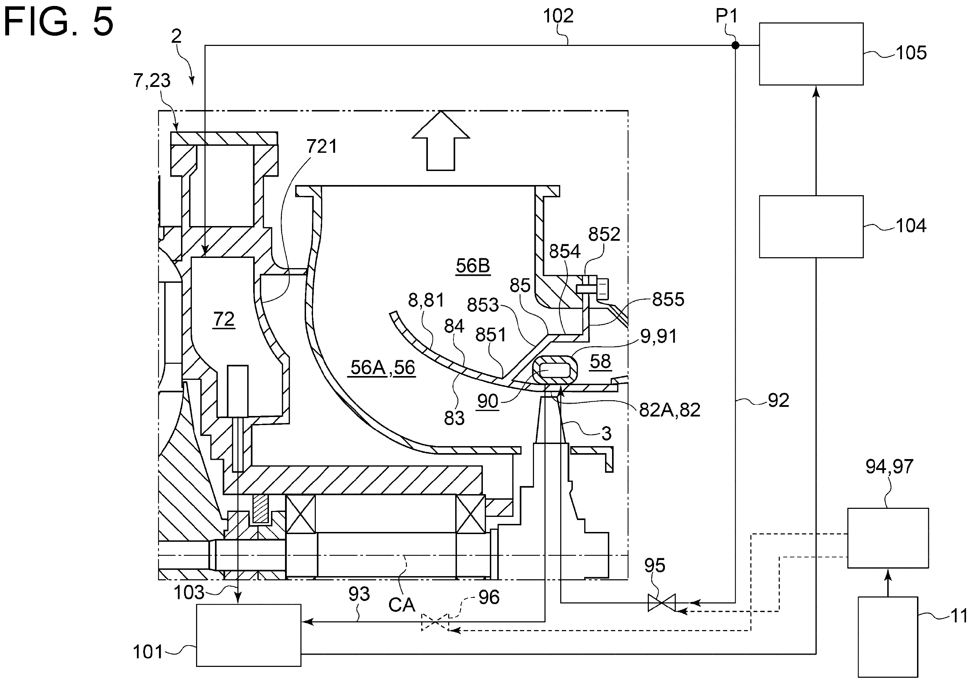

As shown in FIG. 5, the cooling medium discharge line 93 may be connected to the lubricating oil storage device 101. By setting the discharge destination of the cooling medium that has flowed through the cooling medium passage 9 to the lubricating oil storage device 101 provided outside the bearing housing 7, rather than the lubricating oil storage space 72 formed inside the bearing housing 7, the structures of the cooling medium discharge line 93 and the bearing housing 7 can be simplified.

### (Heat Exchange Portion)

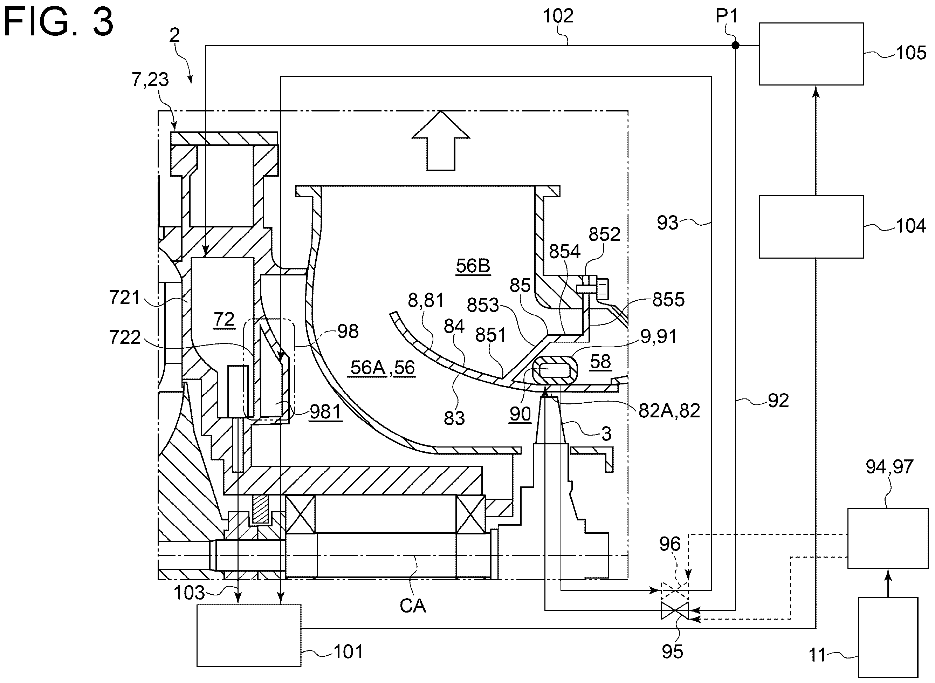

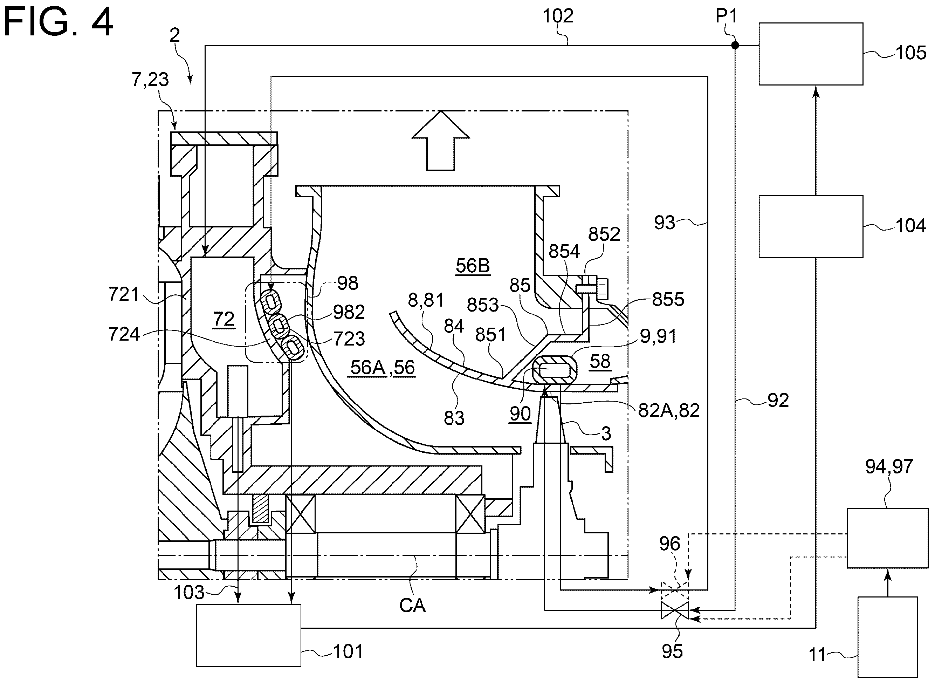

As shown in FIGs. 3 and 4, the cooling medium discharge line 93 may be provided with a heat exchange portion 98 configured to exchange heat between the lubricating oil stored in the lubricating oil storage space 72 and the lubricating oil flowing through the cooling medium discharge line 93. In the embodiments shown in FIGs. 3 and 4, the cooling medium discharge line 93 with the heat exchange portion 98 is connected to the lubricating oil storage device 101.

In the embodiment shown in FIG. 3, an internal space 981 through which the lubricating oil can flow is formed inside a solid portion of a lubricating oil storage space forming portion 721 that forms the lubricating oil storage space 72 of the bearing housing 7. The internal space 981 is formed at a position corresponding to the lubricating oil storage space 72 on the one side (the right side in the drawing) in the axial direction relative to the lubricating oil storage space 72. Being formed at a position corresponding to the lubricating oil storage space 72 means that at least a part of the internal space 981 exists at a radial position and a circumferential position where the lubricating oil storage space 72 exists. The lubricating oil storage space forming portion 721 includes a partition wall 722 extending along a direction intersecting (perpendicular to) the axial direction and partitioning the lubricating oil storage space 72 and the internal space 981. The internal space 981 is adjacent to the lubricating oil storage space 72 across the partition wall 722. In the embodiment shown in FIG. 3, the heat exchange portion 98 is configured to exchange heat between the lubricating oil flowing through the internal space 981 and the lubricating oil stored in the lubricating oil storage space 72. By the heat exchange in the heat exchange portion 98, the heat energy of the lubricating oil flowing through the internal space 981 is transferred to the lubricating oil stored in the lubricating oil storage space 72.

In the embodiment shown in FIG. 4, the heat exchange portion 98 includes a heat transfer pipe 982 which is disposed in the cooling medium discharge line 93 and through which the lubricating oil flows. In the example shown in FIG. 4, the heat transfer pipe 982 is formed in a so-called S-shape, and abuts against a wall surface 723, on the one side (the right side in the drawing) in the axial direction, of the lubricating oil storage space forming portion 721 that forms the lubricating oil storage space 72 of the bearing housing 7. The heat transfer pipe 982 is formed at a position corresponding to the lubricating oil storage space 72. Being formed at a position corresponding to the lubricating oil storage space 72 means that at least a part of the heat transfer pipe 982 exists at a radial position and a circumferential position where the lubricating oil storage space 72 exists. The lubricating oil storage space forming portion 721 includes a wall 724 extending along a direction intersecting (perpendicular to) the axial direction and partitioning the lubricating oil storage space 72 and a space where the heat transfer pipe 982 is arranged. The wall 724 has the wall surface 723. The heat transfer pipe 982 is adjacent to the lubricating oil storage space 72 across the wall 724. In the embodiment shown in FIG. 4, the heat exchange portion 98 is configured to exchange heat between the lubricating oil flowing through the heat transfer pipe 982 and the lubricating oil stored in the lubricating oil storage space 72. By the heat exchange in the heat exchange portion 98, the heat energy of the lubricating oil flowing through the heat transfer pipe 982 is transferred to the lubricating oil stored in the lubricating oil storage space 72. In other embodiments, the heat transfer pipe 982 may be arranged inside a solid portion of the lubricating oil storage space forming portion 721 (for example, inside the wall 724).

The lubricating oil (cooling medium) flowing through the cooling medium discharge line 93 recovers heat energy from the stationary member 8 in the cooling medium passage 9. By the heat exchange in the heat exchange portion 98, the heat energy recovered from the stationary member 8 is transferred to the lubricating oil stored in the lubricating oil storage space 72, whereby the temperature of the lubricating oil stored in the lubricating oil storage space 72 can be increased. By increasing the temperature of the lubricating oil stored in the lubricating oil storage space 72, the viscosity of the lubricating oil can be reduced, and the mechanical loss of the equipment (for example, the bearing 22) to which the lubricating oil is supplied can be reduced.

### (Cooling Position of Cooling Medium)

In some embodiments, as shown in FIGs. 2 to 6, the cooling pipe 91 (cooling medium passage 9) is arranged on an outer peripheral side of the tubular portion 81, and is arranged at an axial position corresponding to the turbine blade 3. Being arranged at an axial position corresponding to the turbine blade 3 means that at least a part of the cooling pipe 91 exists at an axial position where the turbine blade 3 exists. In the embodiments shown in FIGs. 2 to 6, the cooling pipe 91 is arranged in the hollow space 58, and abuts against an outer peripheral surface formed at an axial position corresponding to the stationary wall surface 82A of the tubular portion 81 facing the hollow space 58.

The axial position corresponding to the turbine blade 3 of the tubular portion 81 is a position that has a relatively large influence on the tip clearance of the turbine blade 3, and by cooling this position with the cooling medium, it is possible to effectively suppress an increase in the tip clearance of the turbine blade 3 during low-load operation.

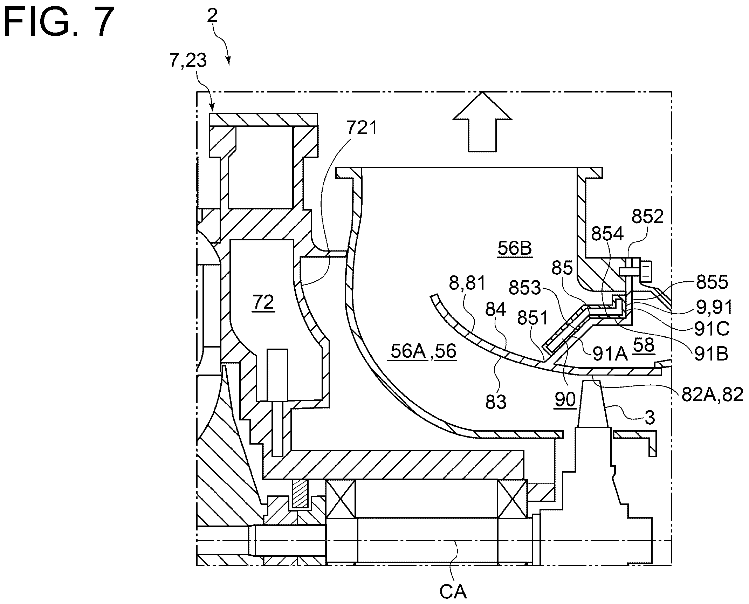

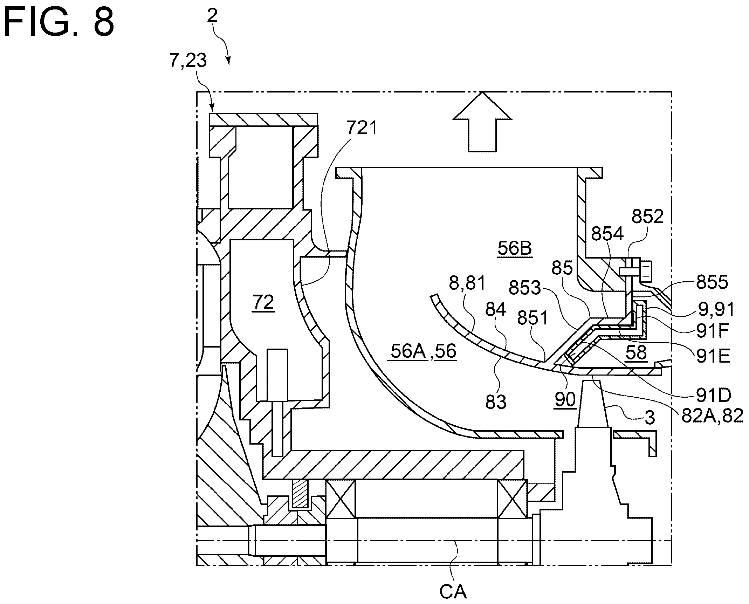

FIGs. 7 and 8 show modified examples of the cooling pipe 91 (cooling medium passage 9). In FIGs. 7 and 8, the cooling medium introduction line 92 and the cooling medium discharge line 93 connected to the cooling pipe 91 are omitted, but the cooling medium introduction line 92 and the cooling medium discharge line 93 may be those shown in FIGs. 2 to 6.

In some embodiments, as shown in FIGs. 7 and 8, the cooling pipe 91 (cooling medium passage 9) is arranged in contact with the support arm portion 85. In the embodiment shown in FIG. 7, the cooling pipe 91 is arranged in the downstream outlet passage 56B, and abuts against a wall surface of the support arm portion 85 on the other side (the left side in FIG. 7) in the axial direction. In the embodiment shown in FIG. 8, the cooling pipe 91 is arranged in the hollow space 58, and abuts against a wall surface of the support arm portion 85 on the one side (the right side in FIG. 8) in the axial direction. The cooling pipe 91 preferably has a shape in conformity with the wall surface of the abutting support arm portion 85 in a cross-section along the rotation center axis CA as shown in FIGs. 7 and 8.

In the embodiment shown in FIG. 7, the cooling pipe 91 includes, in a cross-section along the rotation center axis CA, an inclined side portion 91A extending along the inclined side portion 853 and abutting against the inclined side portion 853, an axial side portion 91B extending along the axial side portion 854 and abutting against the axial side portion 854, and a radial side portion 91C extending along the radial side portion 855 and abutting against the radial side portion 855. The cooling pipe 91 may be composed of one or two of the inclined side portion 91A, the axial side portion 91B, and the radial side portion 91C.

In the embodiment shown in FIG. 8, the cooling pipe 91 includes, in a cross-section along the rotation center axis CA, an inclined side portion 91D extending along the inclined side portion 853 and abutting against the inclined side portion 853, an axial side portion 91E extending along the axial side portion 854 and abutting against the axial side portion 854, and a radial side portion 91F extending along the radial side portion 855 and abutting against the radial side portion 855. The cooling pipe 91 may be composed of one or two of the inclined side portion 91D, the axial side portion 91E, and the radial side portion 91F.

Since the support arm portion 85 undergoes radial thermal expansion due to heat transfer from the exhaust gas, its influence on the tip clearance of the turbine blade 3 is relatively large. By cooling the support arm portion 85 with the cooling medium, it is possible to effectively suppress an increase in the tip clearance of the turbine blade 3 during low-load operation.

### (Shape of Cooling Medium Passage)

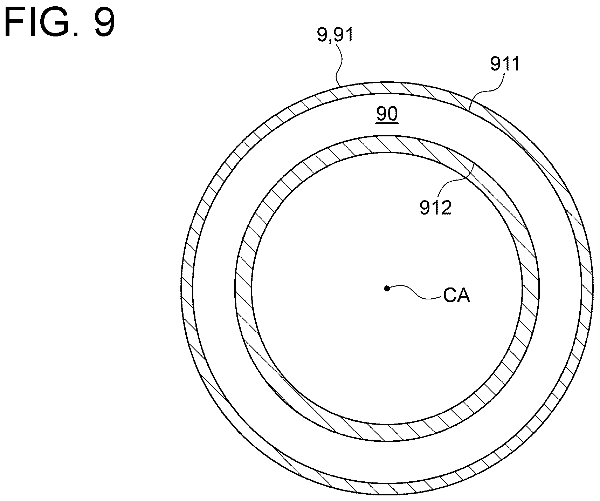

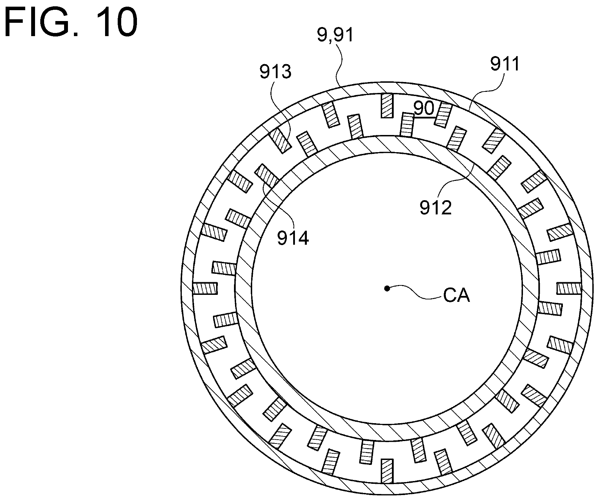

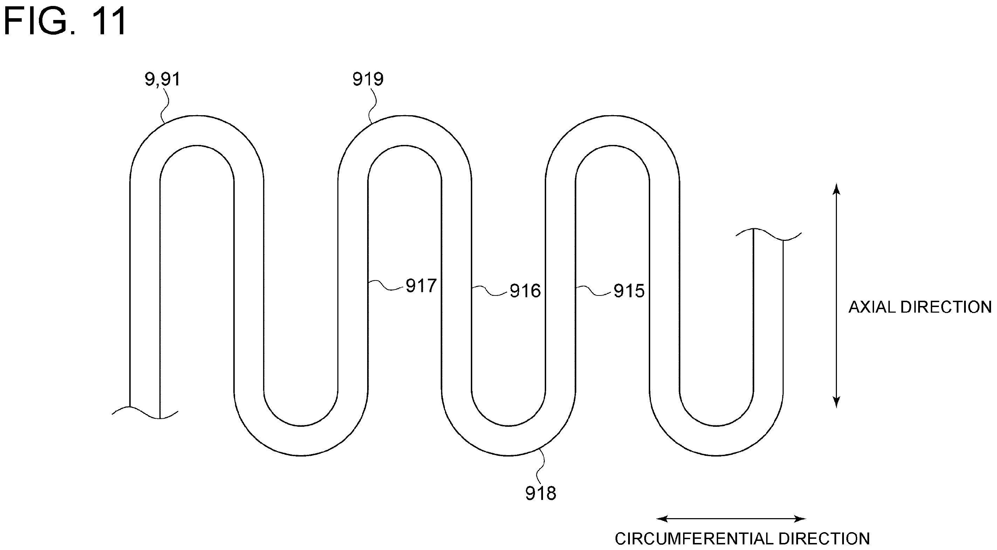

FIGs. 9 and 10 are each a schematic cross-sectional view of the cooling medium passage 9 according to an embodiment of the present disclosure, viewed from one side in the axial direction. FIG. 11 is a schematic diagram of the cooling medium passage 9 according to an embodiment of the present disclosure, viewed from the radially outer side. The shape of the cooling medium passage 9 shown in FIGs. 9 to 11 is applicable to the cooling medium passage 9 shown in FIGs. 2 to 8.

In the embodiments shown in FIGs. 9 and 10, the cooling pipe 91 (cooling medium passage 9) includes an annular pipe extending along the circumferential direction of the turbocharger 2. In this case, the stationary member 8 can be cooled over a wide range in the circumferential direction of the turbocharger 2 by the cooling medium flowing through the internal space 90 of the cooling pipe 91. In other embodiments, the cooling pipe 91 (cooling medium passage 9) may be an arc-shaped pipe extending half the circumference or more (preferably 3/4 circumference or more) along the circumferential direction of the turbocharger 2.

As shown in FIG. 10, the cooling pipe 91 (cooling medium passage 9) may include at least one protruding portion 913, 914 protruding from an inner surface 911, 912 of the cooling pipe 91 and having a wall surface extending along a direction intersecting with the circumferential direction of the turbocharger 2.

In the embodiment shown in FIG. 10, the cooling pipe 91 includes a plurality of protruding portions 913 protruding from the inner surface 911 on the radially outer side of the cooling pipe 91, and a plurality of protruding portions 914 protruding from the inner surface 912 on the radially inner side of the cooling pipe 91. The plurality of protruding portions 913 and the plurality of protruding portions 914 are alternately arranged at intervals in the circumferential direction. In other embodiments, the cooling pipe 91 may include either the plurality of protruding portions 913 or the plurality of protruding portions 914. By providing the protruding portions 913, 914 on the inner surface 911, 912 of the cooling pipe 91, the amount of heat transfer from the cooling medium flowing inside the cooling pipe 91 to the cooling pipe 91 can be increased, so that the amount of heat recovered by the cooling medium from the stationary member 8 can be increased.

As shown in FIG. 11, the cooling pipe 91 (cooling medium passage 9) includes a first long pipe portion 915, a second long pipe portion 916, a third long pipe portion 917, a first bent pipe portion 918, and a second bent pipe portion 919. Each of the first long pipe portion 915, the second long pipe portion 916, and the third long pipe portion 917 extends along the axial direction of the turbocharger 2 when viewed from the radially outer side. The third long pipe portion 917 is arranged with the second long pipe portion 916 interposed between the third long pipe portion 917 and the first long pipe portion 915 in the circumferential direction of the turbocharger 2. The first bent pipe portion 918 has a curved shape connecting an end portion of the first long pipe portion 915 on one side in the axial direction and an end portion of the second long pipe portion 916 on one side in the axial direction when viewed from the radially outer side. The second bent pipe portion 919 has a curved shape connecting an end portion of the second long pipe portion 916 on the other side in the axial direction and an end portion of the third long pipe portion 917 on the other side in the axial direction when viewed from the radially outer side.

By making the cooling medium passage 9 into a so-called S-shape including the first long pipe portion 915, the second long pipe portion 916, the third long pipe portion 917, the first bent pipe portion 918, and the second bent pipe portion 919, the heat transfer area can be increased, and the heat transfer amount can be increased. By increasing the heat transfer amount of the cooling medium passage 9, the amount of heat recovered by the cooling medium from the stationary member 8 can be increased.

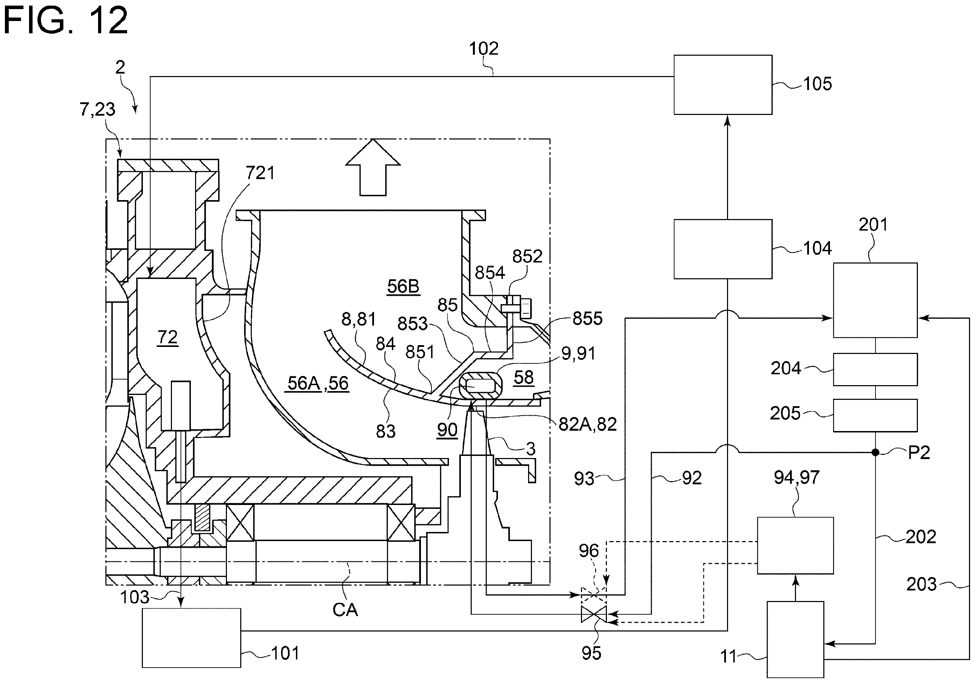

FIG. 12 is a schematic diagram of the turbocharger 2 according to an embodiment of the present disclosure. In the embodiment shown in FIG. 12, the cooling medium is cooling water. By using cooling water, which may be used for cooling the turbocharger 2 or the internal combustion engine 11 on which the turbocharger 2 is mounted, for cooling the stationary member 8, an existing cooling water supply system can be used, and there is no need to install a separate cooling water system. This helps to minimize the complexity of the structure of the internal combustion engine system 1 including the turbocharger 2. The position and shape of the cooling medium passage 9 shown in FIGs. 2 to 11 may be applied to the turbocharger 2 shown in FIG. 12.

In the embodiment shown in FIG. 12, the turbocharger 2 includes a cooling water storage device 201 disposed outside the casing 23 and configured to store cooling water, a cooling water introduction line 202 for guiding the cooling water from the cooling water storage device 201 to the internal combustion engine 11, and a cooling water recovery line 203 for recovering the cooling water from the internal combustion engine 11 to the cooling water storage device 201. The cooling water introduction line 202 is provided with a cooling water pump 204 for boosting the pressure of the cooling water and a cooling water cooler 205 for cooling the cooling water. In the illustrated embodiment, the cooling water cooler 205 is disposed downstream of the cooling water pump 204 in the cooling water introduction line 202.

### (Connection Destination of Cooling Medium Introduction Line)

As shown in FIG. 12, the cooling medium introduction line 92 may be connected to the cooling water introduction line 202. In the illustrated embodiment, the cooling medium introduction line 92 is connected to a connection portion P2 downstream of the cooling water cooler 205 in the cooling water introduction line 202. In the illustrated embodiment, the cooling medium discharge line 93 is connected to the cooling water storage device 201, but it may be connected to the cooling water recovery line 203.

In this case, the cooling water stored in the cooling water storage device 201 can be guided to the cooling medium passage 9 via the cooling medium introduction line 92 and a portion of the cooling water introduction line 202 upstream of the connection portion with the cooling medium introduction line 92. Since the equipment constituting the cooling water circulation system (the cooling water storage device 201, the cooling water introduction line 202, the cooling water recovery line 203, the cooling water pump 204, and the cooling water cooler 205) can be used as equipment for cooling the stationary member 8, the cooling water can be used for cooling the stationary member 8 while minimizing the complexity of the structure of the internal combustion engine system 1 including the turbocharger 2.

In some embodiments, the cooling medium introduction line 92 includes the above-described heat exchange portion 98 (see FIGs. 3 and 4) configured to exchange heat between the lubricating oil stored in the lubricating oil storage space 72 and the cooling water (cooling medium) flowing through the cooling medium discharge line 93.

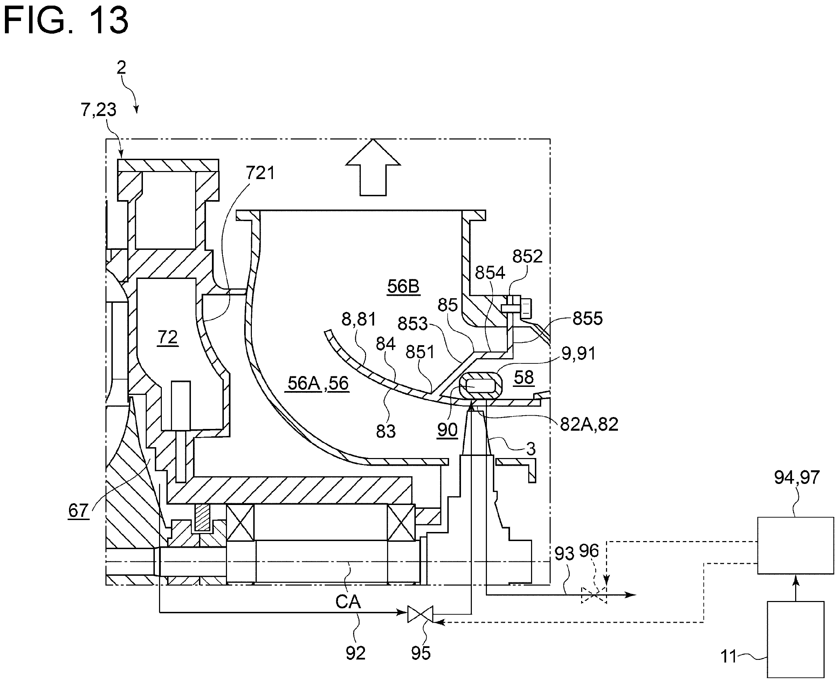

FIG. 13 is a schematic diagram of the turbocharger 2 according to an embodiment of the present disclosure. In the embodiment shown in FIG. 13, the cooling medium is the combustion gas that has flowed into the impeller back space 67. The cooling medium introduction line 92 is connected to the impeller back space 67. In this case, the combustion gas that has flowed into the impeller back space 67 can be used for cooling the stationary member 8.

The position and shape of the cooling medium passage 9 shown in FIGs. 2 to 11 may be applied to the turbocharger 2 shown in FIG. 13. If the above-described hollow space 58 has a predetermined or higher level of airtightness, the hollow space 58 itself may be used as the cooling medium passage 9 instead of the cooling pipe 91.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

Further, an expression such as "comprise", "include", and "have" are not intended to be exclusive of other components.

The present disclosure is not limited to the embodiments described above, but includes modifications to the embodiments described above, and embodiments composed of combinations of those embodiments.

The contents described in the above embodiments would be understood as follows, for instance.
1) A turbocharger (2) according to at least one embodiment of the present disclosure includes:
   a turbine blade (3) configured to be driven by exhaust gas discharged from an internal combustion engine (11);
   a stationary member (8) including a tubular portion (81) having a stationary wall surface (82) that faces the turbine blade (3) with a radial gap (C) therebetween, the tubular portion (81) forming therein an outlet passage (56) through which the exhaust gas that has passed through the turbine blade (3) flows;
   a cooling medium passage (9) disposed adjacent to the stationary member (8) and through which a cooling medium for cooling the stationary member (8) can flow;
   a cooling medium introduction line (92) for guiding the cooling medium to the cooling medium passage (9); and
   a cooling medium flow adjusting device (94) configured to adjust a flow rate of the cooling medium guided to the cooling medium passage (9) via the cooling medium introduction line (92), the cooling medium flow adjusting device (94) being configured to increase the flow rate of the cooling medium guided to the cooling medium passage (9) during low-load operation of the internal combustion engine (11) compared to during high-load operation.

With the above configuration 1), by relatively increasing the flow rate of the cooling medium guided to the cooling medium passage (9) during low-load operation of the internal combustion engine (11), the cooling effect of the stationary member (8) by the cooling medium is enhanced, and the radial thermal expansion of the stationary member (8) is suppressed, whereby it is possible to suppress an increase in the tip clearance (radial gap C) of the turbine blade (3) during low-load operation of the internal combustion engine (11). By suppressing the increase in the tip clearance of the turbine blade (3) during low-load operation of the internal combustion engine (11), the efficiency of the turbine of the turbocharger can be improved during low-load operation of the internal combustion engine (11).

2) In some embodiments, in the turbocharger (2) as defined in the above 1),
the cooling medium is lubricating oil.

With the above configuration 2), by using lubricating oil, which may be used for lubricating equipment mounted on the turbocharger (2) (for example, the bearing 22), for cooling the stationary member 8, it is possible to minimize the complexity of the structure of the internal combustion engine system (1) including the turbocharger (2).

3) In some embodiments, the turbocharger (2) as defined in the above 2) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein;
a lubricating oil storage device (101) disposed outside the bearing housing (7) and configured to store lubricating oil; and
a lubricating oil introduction line (102) for guiding the lubricating oil from the lubricating oil storage device (101) to the lubricating oil storage space (72), and
the cooling medium introduction line (92) is connected to the lubricating oil introduction line (102).

With the above configuration 3), the lubricating oil stored in the lubricating oil storage device (101) can be guided to the cooling medium passage (9) via the cooling medium introduction line (92) and a portion of the lubricating oil introduction line (102) upstream of the connection portion with the cooling medium introduction line (92). As a result, the lubricating oil can be used for cooling the stationary member (8) while minimizing the complexity of the structure of the internal combustion engine system (1) including the turbocharger (2).

4) In some embodiments, the turbocharger (2) as defined in the above 2) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein; and
a lubricating oil storage device (101) disposed outside the bearing housing (7) and configured to store lubricating oil, and
the cooling medium introduction line (92) is connected to the lubricating oil storage space (72).

With the above configuration 4), the lubricating oil stored in the lubricating oil storage space (72) can be guided to the cooling medium passage (9) via the cooling medium introduction line (92). As a result, the lubricating oil can be used for cooling the stationary member (8) while minimizing the complexity of the structure of the internal combustion engine system (1) including the turbocharger (2).

5) In some embodiments, the turbocharger (2) as defined in any one of 2) to 4) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein;
a lubricating oil storage device (101) disposed outside the bearing housing (7) and configured to store lubricating oil;
a lubricating oil introduction line (102) for guiding the lubricating oil from the lubricating oil storage device (101) to the lubricating oil storage space (72); and
a cooling medium discharge line (93) for guiding the cooling medium discharged from the cooling medium passage (9), and
the cooling medium discharge line (93) includes a heat exchange portion (98) configured to exchange heat between the lubricating oil stored in the lubricating oil storage space (72) and the lubricating oil flowing through the cooling medium discharge line (93).

With the above configuration 5), the lubricating oil (cooling medium) flowing through the cooling medium discharge line (93) recovers heat energy from the stationary member (8) in the cooling medium passage (9). By the heat exchange in the heat exchange portion (98), the heat energy recovered from the stationary member (8) is transferred to the lubricating oil stored in the lubricating oil storage space (72), whereby the temperature of the lubricating oil stored in the lubricating oil storage space (72) can be increased. By increasing the temperature of the lubricating oil stored in the lubricating oil storage space (72), the viscosity of the lubricating oil can be reduced, and the mechanical loss of the equipment (for example, the bearing 22) to which the lubricating oil is supplied can be reduced.

6) In some embodiments, the turbocharger (2) as defined in any one of 2) to 4) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein;
a lubricating oil storage device (101) disposed outside the bearing housing (7) and configured to store lubricating oil;
a lubricating oil introduction line (102) for guiding the lubricating oil from the lubricating oil storage device (101) to the lubricating oil storage space (72); and
a cooling medium discharge line (93) for guiding the cooling medium discharged from the cooling medium passage (9), and
the cooling medium discharge line (93) is connected to the lubricating oil storage space (72).

With the above configuration 6), the lubricating oil (cooling medium) flowing through the cooling medium discharge line (93) recovers heat energy from the stationary member (8) in the cooling medium passage (9). By introducing the lubricating oil flowing through the cooling medium discharge line (93) into the lubricating oil storage space (72), the temperature of the lubricating oil stored in the lubricating oil storage space (72) can be increased. By increasing the temperature of the lubricating oil stored in the lubricating oil storage space (72), the viscosity of the lubricating oil can be reduced, and the mechanical loss of the equipment (for example, the bearing 22) to which the lubricating oil is supplied can be reduced.

7) In some embodiments, the turbocharger (2) as defined in any one of 2) to 4) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein;
a lubricating oil storage device (101) disposed outside the bearing housing (7) and configured to store lubricating oil;
a lubricating oil introduction line (102) for guiding the lubricating oil from the lubricating oil storage device (101) to the lubricating oil storage space (72); and
a cooling medium discharge line (93) for guiding the cooling medium discharged from the cooling medium passage (9), and
the cooling medium discharge line (93) is connected to the lubricating oil storage device (101).

With the above configuration 7), the lubricating oil (cooling medium) flowing through the cooling medium discharge line (93) is introduced into the lubricating oil storage device (101). By setting the discharge destination of the cooling medium that has flowed through the cooling medium passage (9) to the lubricating oil storage device (101) provided outside the bearing housing (7), rather than the lubricating oil storage space (72) formed inside the bearing housing (7), the structures of the cooling medium discharge line (93) and the bearing housing (7) can be simplified.

8) In some embodiments, in the turbocharger (2) as defined in the above 1),
the cooling medium is cooling water.

With the above configuration 8), by using cooling water, which may be used for cooling the turbocharger (2) or the internal combustion engine (11) on which the turbocharger (2) is mounted, for cooling the stationary member (8), it is possible to minimize the complexity of the structure of the internal combustion engine system (1) including the turbocharger (2).

9) In some embodiments, the turbocharger (2) as defined in the above 8) further includes:
a cooling water storage device (201) configured to store cooling water; and
a cooling water introduction line (202) for guiding the cooling water from the cooling water storage device (201) to the internal combustion engine (11), and
the cooling medium introduction line (92) is connected to the cooling water introduction line (202).

With the above configuration 9), the cooling water stored in the cooling water storage device (201) can be guided to the cooling medium passage (9) via the cooling medium introduction line (92) and a portion of the cooling water introduction line (202) upstream of the connection portion with the cooling medium introduction line (92). As a result, the cooling water can be used for cooling the stationary member (8) while minimizing the complexity of the structure of the internal combustion engine system (1) including the turbocharger (2).

10) In some embodiments, the turbocharger (2) as defined in the above 8) or 9) further includes:
a bearing housing (7) configured to house a bearing (22) rotatably supporting a rotational shaft (21) to which the turbine blade (3) is attached on one side in an axial direction, and having a lubricating oil storage space (72) configured to store lubricating oil formed therein;
a lubricating oil storage device (101) disposed outside the bearing housing (7) and configured to store lubricating oil;
a lubricating oil introduction line (102) for guiding the lubricating oil from the lubricating oil storage device (101) to the lubricating oil storage space (72); and
a cooling medium discharge line (93) for guiding the cooling medium discharged from the cooling medium passage (9), and
the cooling medium discharge line (93) includes a heat exchange portion (98) configured to exchange heat between the lubricating oil stored in the lubricating oil storage space (72) and the cooling water flowing through the cooling medium discharge line (93).

With the above configuration 10), the cooling water (cooling medium) flowing through the cooling medium discharge line (93) recovers heat energy from the stationary member (8) in the cooling medium passage (9). By the heat exchange in the heat exchange portion (98), the heat energy recovered from the stationary member (8) is transferred to the lubricating oil stored in the lubricating oil storage space (72), whereby the temperature of the lubricating oil stored in the lubricating oil storage space (72) can be increased. By increasing the temperature of the lubricating oil stored in the lubricating oil storage space (72), the viscosity of the lubricating oil can be reduced, and the mechanical loss of the equipment (for example, the bearing 22) to which the lubricating oil is supplied can be reduced.

11) In some embodiments, in the turbocharger (2) as defined in the above 1),
the cooling medium introduction line (92) is connected to a space (impeller back space 67) formed on a back surface (43) side of an impeller (4) of the turbocharger (2).

With the above configuration 11), a gas that has flowed into the space (impeller back space 67) formed on the back surface (43) side of the impeller (4) of the turbocharger (2) can be used for cooling the stationary member (8).

12) In some embodiments, in the turbocharger (2) as defined in any one of 1) to 11),
the cooling medium passage (9) includes an annular pipe (cooling pipe 91) extending along a circumferential direction of the turbocharger (2).

With the above configuration 12), the stationary member (8) can be cooled over a wide range in the circumferential direction of the turbocharger (2) by the cooling medium flowing through an internal space (90) of the annular pipe (91).

13) In some embodiments, in the turbocharger (2) as defined in the above 12),
the cooling medium passage (9) further includes at least one protruding portion (913, 914) protruding from an inner surface (911, 912) of the annular pipe (91) and having a wall surface extending along a direction intersecting with the circumferential direction of the turbocharger (2).

With the above configuration 13), by providing the protruding portion (913, 914) on the inner surface (911, 912) of the annular pipe (91), the amount of heat transfer from the cooling medium flowing inside the annular pipe (91) to the annular pipe (91) can be increased, so that the amount of heat recovered by the cooling medium from the stationary member (8) can be increased.

14) In some embodiments, in the turbocharger (2) as defined in any one of 1) to 11),
the cooling medium passage (9) includes:
a first long pipe portion (915) extending along an axial direction of the turbocharger (2);
a second long pipe portion (916) extending along the axial direction;
a third long pipe portion (917) extending along the axial direction, the third long pipe portion (917) being arranged with the second long pipe portion (916) interposed between the third long pipe portion (917) and the first long pipe portion (915) in a circumferential direction of the turbocharger (2);
a first bent pipe portion (918) connecting an end portion of the first long pipe portion (915) on one side in the axial direction and an end portion of the second long pipe portion (916) on the one side in the axial direction; and
a second bent pipe portion (919) connecting an end portion of the second long pipe portion (916) on the other side in the axial direction and an end portion of the third long pipe portion (917) on the other side in the axial direction.

With the above configuration 14), by making the cooling medium passage (9) into a so-called S-shape including the first long pipe portion (915), the second long pipe portion (916), the third long pipe portion (917), the first bent pipe portion (918), and the second bent pipe portion (919), the heat transfer area can be increased, and the heat transfer amount can be increased. By increasing the heat transfer amount of the cooling medium passage (9), the amount of heat recovered by the cooling medium from the stationary member (8) can be increased.

15) In some embodiments, in the turbocharger (2) as defined in any one of 1) to 14),
the cooling medium passage (9) is arranged on an outer peripheral side of the tubular portion (81) and is arranged at an axial position corresponding to the turbine blade (3).

With the above configuration 15), the axial position corresponding to the turbine blade (3) of the tubular portion (81) is a position that has a relatively large influence on the tip clearance of the turbine blade (3), and by cooling this position with the cooling medium, it is possible to effectively suppress an increase in the tip clearance of the turbine blade (3) during low-load operation.

16) In some embodiments, in the turbocharger (2) as defined in any one of 1) to 14),
the stationary member (8) further includes a support arm portion (85) extending outward in a radial direction from an inner peripheral end portion (851) connected to the tubular portion (81), an outer peripheral end portion (852) of the support arm portion (85) being supported by a casing (23) of the turbocharger (2), and
the cooling medium passage (9) is arranged in contact with the support arm portion (85).

With the above configuration 16), since the support arm portion (85) undergoes radial thermal expansion due to heat transfer from the exhaust gas, its influence on the tip clearance of the turbine blade (3) is relatively large. By cooling the support arm portion (85) with the cooling medium, it is possible to effectively suppress an increase in the tip clearance of the turbine blade (3) during low-load operation.

### Reference Signs List

- 1: Internal combustion engine system
- 11: Internal combustion engine
- 2: Turbocharger
- 21: Rotational shaft
- 22: Bearing
- 23: Casing
- 3: Turbine blade
- 4: Impeller
- 5: Turbine housing
- 51: Inlet-side housing
- 52: Outlet-side housing
- 6: Compressor housing
- 67: Impeller back space
- 7: Bearing housing
- 8: Stationary member
- 9: Cooling medium passage

## Claims

1. A turbocharger, comprising:
a turbine blade configured to be driven by exhaust gas discharged from an internal combustion engine;
a stationary member including a tubular portion having a stationary wall surface that faces the turbine blade with a radial gap therebetween, the tubular portion forming therein an outlet passage through which the exhaust gas that has passed through the turbine blade flows;
a cooling medium passage disposed adjacent to the stationary member and through which a cooling medium for cooling the stationary member can flow;
a cooling medium introduction line for guiding the cooling medium to the cooling medium passage; and
a cooling medium flow adjusting device configured to adjust a flow rate of the cooling medium guided to the cooling medium passage via the cooling medium introduction line, the cooling medium flow adjusting device being configured to increase the flow rate of the cooling medium guided to the cooling medium passage during low-load operation of the internal combustion engine compared to during high-load operation.

2. The turbocharger according to claim 1,
wherein the cooling medium is lubricating oil.

3. The turbocharger according to claim 2, further comprising:
a bearing housing configured to house a bearing rotatably supporting a rotational shaft to which the turbine blade is attached on one side in an axial direction, and having a lubricating oil storage space configured to store lubricating oil formed therein;
a lubricating oil storage device disposed outside the bearing housing and configured to store lubricating oil; and
a lubricating oil introduction line for guiding the lubricating oil from the lubricating oil storage device to the lubricating oil storage space,
wherein the cooling medium introduction line is connected to the lubricating oil introduction line.

4. The turbocharger according to claim 2, further comprising
a bearing housing configured to house a bearing rotatably supporting a rotational shaft to which the turbine blade is attached on one side in an axial direction, and having a lubricating oil storage space configured to store lubricating oil formed therein,
wherein the cooling medium introduction line is connected to the lubricating oil storage space.

5. The turbocharger according to any one of claims 2 to 4, further comprising:
a bearing housing configured to house a bearing rotatably supporting a rotational shaft to which the turbine blade is attached on one side in an axial direction, and having a lubricating oil storage space configured to store lubricating oil formed therein;
a lubricating oil storage device disposed outside the bearing housing and configured to store lubricating oil;
a lubricating oil introduction line for guiding the lubricating oil from the lubricating oil storage device to the lubricating oil storage space; and
a cooling medium discharge line for guiding the cooling medium discharged from the cooling medium passage,
wherein the cooling medium discharge line includes a heat exchange portion configured to exchange heat between the lubricating oil stored in the lubricating oil storage space and the lubricating oil flowing through the cooling medium discharge line.

6. The turbocharger according to any one of claims 2 to 4, further comprising:
a bearing housing configured to house a bearing rotatably supporting a rotational shaft to which the turbine blade is attached on one side in an axial direction, and having a lubricating oil storage space configured to store lubricating oil formed therein;
a lubricating oil storage device disposed outside the bearing housing and configured to store lubricating oil;
a lubricating oil introduction line for guiding the lubricating oil from the lubricating oil storage device to the lubricating oil storage space; and
a cooling medium discharge line for guiding the cooling medium discharged from the cooling medium passage,
wherein the cooling medium discharge line is connected to the lubricating oil storage space.

7. The turbocharger according to any one of claims 2 to 4, further comprising:
a bearing housing configured to house a bearing rotatably supporting a rotational shaft to which the turbine blade is attached on one side in an axial direction, and having a lubricating oil storage space configured to store lubricating oil formed therein;
a lubricating oil storage device disposed outside the bearing housing and configured to store lubricating oil;
a lubricating oil introduction line for guiding the lubricating oil from the lubricating oil storage device to the lubricating oil storage space; and
a cooling medium discharge line for guiding the cooling medium discharged from the cooling medium passage,
wherein the cooling medium discharge line is connected to the lubricating oil storage device.

8. The turbocharger according to claim 1,
wherein the cooling medium is cooling water.

9. The turbocharger according to claim 8, further comprising:
a cooling water storage device configured to store cooling water; and
a cooling water introduction line for guiding the cooling water from the cooling water storage device to the internal combustion engine,
wherein the cooling medium introduction line is connected to the cooling water introduction line.

10. The turbocharger according to claim 8 or 9, further comprising:
a bearing housing configured to house a bearing rotatably supporting a rotational shaft to which the turbine blade is attached on one side in an axial direction, and having a lubricating oil storage space configured to store lubricating oil formed therein;
a lubricating oil storage device disposed outside the bearing housing and configured to store lubricating oil;
a lubricating oil introduction line for guiding the lubricating oil from the lubricating oil storage device to the lubricating oil storage space; and
a cooling medium discharge line for guiding the cooling medium discharged from the cooling medium passage,
wherein the cooling medium discharge line includes a heat exchange portion configured to exchange heat between the lubricating oil stored in the lubricating oil storage space and the cooling water flowing through the cooling medium discharge line.

11. The turbocharger according to claim 1,
wherein the cooling medium introduction line is connected to a space formed on a back surface side of an impeller of the turbocharger.

12. The turbocharger according to any one of claims 1 to 4, 8, 9, or 11,
wherein the cooling medium passage includes an annular pipe extending along a circumferential direction of the turbocharger.

13. The turbocharger according to claim 12,
wherein the cooling medium passage further includes at least one protruding portion protruding from an inner surface of the annular pipe and having a wall surface extending along a direction intersecting with the circumferential direction of the turbocharger.

14. The turbocharger according to any one of claims 1 to 4, 8, 9, or 11,
wherein the cooling medium passage includes:
a first long pipe portion extending along an axial direction of the turbocharger;
a second long pipe portion extending along the axial direction;
a third long pipe portion extending along the axial direction, the third long pipe portion being arranged with the second long pipe portion interposed between the third long pipe portion and the first long pipe portion in a circumferential direction of the turbocharger;
a first bent pipe portion connecting an end portion of the first long pipe portion on one side in the axial direction and an end portion of the second long pipe portion on the one side in the axial direction; and
a second bent pipe portion connecting an end portion of the second long pipe portion on the other side in the axial direction and an end portion of the third long pipe portion on the other side in the axial direction.

15. The turbocharger according to any one of claims 1 to 4, 8, 9, or 11,
wherein the cooling medium passage is arranged on an outer peripheral side of the tubular portion and is arranged at an axial position corresponding to the turbine blade.

16. The turbocharger according to any one of claims 1 to 4, 8, 9, or 11,
wherein the stationary member further includes a support arm portion extending outward in a radial direction from an inner peripheral end portion connected to the tubular portion, an outer peripheral end portion of the support arm portion being supported by a casing of the turbocharger, and
wherein the cooling medium passage is arranged in contact with the support arm portion.
